# EUROPEAN PATENT APPLICATION

(11) **EP 4 428 856 A1**
(43) Date of publication of application: **11.09.2024**
(21) Application number: 22942102.9
(22) Date of filing: 19.05.2022
(51) Int. Cl.: G10L 15/22, G01S 11/14

(54) **VOICE WAKE-UP METHOD AND APPARATUS OF ELECTRONIC DEVICE, STORAGE MEDIUM AND CHIP**

(71) Applicant: Beijing Xiaomi Mobile Software Co., Ltd., Beijing 100085 (CN); Beijing Xiaomi Pinecone Electronics Co., Ltd., Beijing 100085 (CN)
(72) Inventor: ZHOU, Lingsong, Beijing 100085 (CN)
(74) Representative: Stöckeler, Ferdinand
(86) International application number: PCT/CN2022/093973
(87) International publication number: WO 2023/221062

(57) **Abstract**

The disclosure relates to a voice wake-up method and apparatus for an electronic device, a storage medium and a chip. The voice wake-up method for the electronic device is performed by a first electronic device. The first electronic device and a plurality of second electronic devices are located in a same local area network. The method includes: obtaining a first distance based on ultrasonic detection, where the first distance is configured to represent a distance between the first electronic device and a user; sending the first distance to a server, and receiving a wake-up strategy fed back by the server, where the wake-up strategy is configured to indicate whether the first electronic device is an electronic device closest to the user among a plurality of connected electronic devices in the local area network; and determining, after detecting a wake-up word, whether to respond to the wake-up word according to the wake-up strategy.

## Description

### TECHNICAL FIELD

The disclosure relates to the field of communication technology, and particularly relates to a voice wake-up method and apparatus for an electronic device, a storage medium and a chip.

### BACKGROUND OF THE INVENTION

As the development of artificial intelligence technology and the increasing maturity of 5G technology, an increasing number of electronic devices are used in the home environment. A scene with many electronic devices in the home environment has become very common. Voice wake-up is the gateway to intelligent interaction. In a case that there exists more than one electronic device, a problem of more than one wake-up response arises. In a case that all the electronic devices scramble to respond to a voice command from a user, it creates a terrible experience for the user. In order to provide a great user experience, no matter how many electronic devices there are in the home environment, ultimately there only needs to be one electronic device that responds to the needs of the user.

In related art, the electronic device responds slowly when the user wake-ups the electronic device by voice.

### SUMMARY OF THE INVENTION

In order to solve the problems existing in related art, the disclosure provides a voice wake-up method and apparatus for an electronic device, a storage medium and a chip.

According to a first aspect of the disclosure, a voice wake-up method for an electronic device is provided. The voice wake-up method is performed by a first electronic device. The first electronic device and a plurality of second electronic devices are located in a same local area network. The voice wake-up method includes:
obtaining a first distance based on ultrasonic detection, where the first distance is configured to represent a distance between the first electronic device and a user;
sending the first distance to a server, and receiving a wake-up strategy fed back by the server, where the wake-up strategy is configured to indicate whether the first electronic device is an electronic device closest to the user among a plurality of connected electronic devices in the local area network; and
determining, after detecting a wake-up word, whether to respond to the wake-up word according to the wake-up strategy.

In an example, determining whether to respond to the wake-up word according to the wake-up strategy includes:
responding to the wake-up word in a case that the wake-up strategy indicates that the first electronic device is the electronic device closest to the user among the plurality of electronic devices.

In an example, obtaining the first distance based on the ultrasonic detection includes:
transmitting a first acoustic wave signal into a space where the first electronic device is located according to preset ultrasonic frequency band information;
receiving a second acoustic wave signal, where the second acoustic wave signal is a reflection signal of the first acoustic wave signal by a person or an object in the space where the first electronic device is located; and
determining, according to the second acoustic wave signal, whether a user exists in the space where the electronic device is located, and determining the first distance in a case that the user exists.

In an example, determining, according to the second acoustic wave signal, whether a user exists in the space where the electronic device is located includes:
determining an ultrasonic disturbance amplitude value around the first electronic device by inputting the second acoustic wave signal into a two-dimensional multiple signal classification (2D MUSIC) algorithm; and
determining that a user exists in the space where the first electronic device is located in a case that the ultrasonic disturbance amplitude value is non-zero.

In an example, determining the first distance includes:
constructing an echo two-dimensional image according to the ultrasonic disturbance amplitude value, where in the echo two-dimensional image, an abscissa represents a distance, and an ordinate represents an angle;
obtaining a disturbance center point representing an acoustic-wave-signal peak value by performing, according to the two-dimensional image, peak detection on the ultrasonic disturbance amplitude value, and determining a coordinate position of the disturbance center point in the echo two-dimensional image, where the disturbance center point is configured to represent a position of the user in the preset space; and
setting a distance between the disturbance center point and the first electronic device as the first distance.

In an example, after determining the first distance, the method further includes:
detecting in real time whether the first distance changes; and
sending a latest first distance to the server in a case that the first distance changes.

According to a second aspect, a voice wake-up method for an electronic device is provided. The voice wake-up method is performed by a server and includes:
obtaining a first distance, where the first distance is sent from a first electronic device, the first distance is configured to indicate a distance between the first electronic device and a user, and the first electronic device and a plurality of second electronic devices are located in a same local area network;
determining a wake-up strategy corresponding to the first electronic device according to the first distance, where the wake-up strategy is configured to indicate whether the first electronic device is an electronic device closest to the user among a plurality of connected electronic devices in the local area network; and
sending the wake-up strategy to the first electronic device.

In an example, determining the wake-up strategy corresponding to the first electronic device according to the first distance includes:
obtaining a second distance, where the second distance is sent from the second electronic device, and the second distance indicates a distance between the second electronic device and the user; and
comparing the first distance with the second distance, and obtaining the wake-up strategy according to a comparison result.

According to a third aspect, a voice wake-up apparatus for an electronic device is provided. The voice wake-up apparatus is applied to a first electronic device. The first electronic device and a plurality of second electronic devices are located in a same local area network. The voice wake-up apparatus includes:
a measurement module, configured to obtain a first distance based on ultrasonic detection, where the first distance is configured to represent a distance between the first electronic device and a user;
a first sending module, configured to send the first distance to a server, and receive a wake-up strategy fed back by the server, where the wake-up strategy is configured to indicate whether the first electronic device is an electronic device closest to the user among a plurality of connected electronic devices in the local area network; and
a response module, configured to determine, after detecting a wake-up word, whether to respond to the wake-up word according to the wake-up strategy.

In an example, the response module determines whether to respond to the wake-up word according to the wake-up strategy as follows:
responding to the wake-up word in a case that the wake-up strategy indicates that the first electronic device is the electronic device closest to the user among the plurality of electronic devices.

In an example, the measurement module obtains the first distance based on the ultrasonic detection as follows:
transmitting a first acoustic wave signal into a space where the first electronic device is located according to preset ultrasonic frequency band information;
receiving a second acoustic wave signal, where the second acoustic wave signal is a reflection signal of the first acoustic wave signal by a person or an object in the space where the first electronic device is located; and
determining, according to the second acoustic wave signal, whether a user exists in the space where the electronic device is located, and determining the first distance in a case that the user exists.

In an example, the measurement module determines, according to the second acoustic wave signal, whether a user exists in the space where the electronic device is located as follows:
determining an ultrasonic disturbance amplitude value around the first electronic device by inputting the second acoustic wave signal into a two-dimensional multiple signal classification (2D MUSIC) algorithm; and
determining that the user exists in the space where the first electronic device is located in a case that the ultrasonic disturbance amplitude value is non-zero.

In an example, the measurement module determines the first distance as follows:
constructing an echo two-dimensional image according to the ultrasonic disturbance amplitude value, where in the echo two-dimensional image, an abscissa represents a distance, and an ordinate represents an angle;
obtaining a disturbance center point representing an acoustic-wave-signal peak value by performing, according to the two-dimensional image, peak detection on the ultrasonic disturbance amplitude value, and determining a coordinate position of the disturbance center point in the echo two-dimensional image, where the disturbance center point is configured to represent a position of the user in the preset space; and
setting a distance between the disturbance center point and the first electronic device as the first distance.

In an example, after the first distance is determined, the voice wake-up apparatus further includes:
an updating module, configured to detect in real time whether the first distance changes; and
send a latest first distance to the server in a case that the first distance changes.

According to a fourth aspect, a voice wake-up apparatus for an electronic device is provided. The voice wake-up apparatus is applied to a server, and includes:
an obtaining module, configured to obtain a first distance, where the first distance is sent from a first electronic device, the first distance is configured to indicate a distance between the first electronic device and a user, and the first electronic device and a plurality of second electronic devices are located in a same local area network;
a determination module, configured to determine a wake-up strategy corresponding to the first electronic device according to the first distance, where the wake-up strategy is configured to indicate whether the first electronic device is an electronic device closest to the user among a plurality of connected electronic devices in the local area network; and
a second sending module, configured to send the wake-up strategy to the first electronic device.

In an example, the determination module determines the wake-up strategy corresponding to
the first electronic device according to the first distance as follows:
obtaining a second distance, where the second distance is sent from the second electronic device, and the second distance indicates a distance between the second electronic device and the user; and
comparing the first distance with the second distance, and obtaining the wake-up strategy according to a comparison result.

According to a fifth aspect of the disclosure, a voice wake-up apparatus for an electronic device is provided. The voice wake-up apparatus includes:
a memory storing a computer program; and
a processor configured to execute the computer program in the memory, so as to implement the steps of the voice wake-up method for the electronic device provided in the first aspect of the disclosure.

According to a sixth aspect of the disclosure, a voice wake-up apparatus for an electronic device is provided. The voice wake-up apparatus includes:
a memory storing a computer program; and
a processor configured to execute the computer program in the memory, so as to implement the steps of the voice wake-up method for the electronic device provided in the second aspect of the disclosure.

According to a seventh aspect of the disclosure, a computer-readable storage medium is provided. The computer-readable storage medium stores computer program instructions. When executed by a processor, the computer program instructions implement the steps of the voice wake-up method for the electronic device provided in the first aspect of the disclosure.

According to an eighth aspect of the disclosure, a computer-readable storage medium is provided. The computer-readable storage medium stores computer program instructions. When executed by a processor, the computer program instructions implement the steps of the voice wake-up method for the electronic device provided in the second aspect of the disclosure.

According to a ninth aspect of the disclosure, a chip is provided. The chip includes a processor and an interface. The processor is configured to read instructions, so as to execute the steps of the voice wake-up method for the electronic device provided in the first aspect of the disclosure.

The technical solutions provided in the disclosure may include the following beneficial effects: the first electronic device obtains the first distance between the first electronic device and the user based on the ultrasonic detection, sends the first distance to the server, and then receives the wake-up strategy fed back by the server indicating whether the first electronic device is an electronic device closest to the user among the plurality of connected electronic devices in the local area network. In this way, after the first electronic device detects the wake-up word, the first electronic device does not need to send the detected wake-up word to the server, the server does not need to receive a wake-up request generated by the electronic device based on the wake-up word in real time and make a wake-up result for the received wake-up request, but after the first electronic device detects the wake-up word, the first electronic device directly determines whether to respond to the wake-up word according to the wake-up strategy, such that a wake-up response speed of the first electronic device is improved.

It is to be understood that both the foregoing general description and the following detailed description are illustrative and interpretative and are not restrictive of the disclosure.

### BRIEF DESCRIPTION OF DRAWINGS

The accompanying drawings are incorporated in the description as a constituent part of the description, illustrate examples conforming to the disclosure, and serve to explain the principles of the disclosure together with the specification.
Fig. 1 is a flowchart of a voice wake-up method for an electronic device according to an example.
Fig. 2 is a flowchart of a voice wake-up method for an electronic device according to an example.
Fig. 3 is a flowchart of interaction of a voice wake-up method for an electronic device according to an example.
Fig. 4 is a block diagram of a voice wake-up apparatus for an electronic device according to an example.
Fig. 5 is a block diagram of a voice wake-up apparatus for an electronic device according to an example.
Fig. 6 is a block diagram of a voice wake-up apparatus for an electronic device according to an example.
Fig. 7 is a block diagram of a voice wake-up apparatus for an electronic device according to an example.

### DETAILED DESCRIPTION OF THE INVENTION

Description will be made in detail to examples, instances of which are illustrated in the accompanying drawings. When the following description relates to the accompanying drawings, the same numbers in different accompanying drawings refer to the same or similar elements unless otherwise indicated. The examples described in the following do not represent all examples consistent with the disclosure. Rather, they are merely instances of apparatuses and methods consistent with some aspects of the disclosure as detailed in the appended claims.

It is to be noted that in the present disclosure, all the actions of obtaining a signal, information or data are performed under the premise of complying with corresponding data protection laws and regulations of the country where they are located and obtaining the authorization given by an owner of a corresponding apparatus.

In related art, in an application scene of voice wake-up, after a user utters a wake-up word, a plurality of electronic devices included in a same local area network all detect the wake-up word, generate wake-up requests according to the wake-up word, and send the wake-up requests carrying sound energy for the wake-up word to a server. The server obtains the wake-up requests sent from all the electronic devices included in smart home devices, determines a wake-up strategy for each electronic device according to the sound energy for the wake-up word in the wake-up request sent from each electronic device, and transmits the wake-up strategy to the corresponding electronic device, such that the electronic device executes a wake-up operation or suppresses the wake-up operation.

However, the inventors of the disclosure have found the following problems in the solution of related art in a process of achieving the technical solutions of the disclosure: since different electronic devices detect the wake-up word at different times, and different electronic devices send the wake-up requests carrying the sound energy for the wake-up word to the server at different times, and the server can determine the wake-up strategy for each electronic device only after receiving the wake-up requests from all electronic devices, the server has a long waiting time, which reduces a wake-up response speed of the electronic devices.

That is to say, all electronic devices that detect the wake-up word need to send a wake-up request to the server, and the server issues an instruction after receiving the wake-up requests from all electronic devices. Two information transmissions are involved, and the more the devices are, the more complex the network is, the longer a transmission time is, and it is prone for the user to wait for a long time to receive a response of an electronic device after uttering the wake-up word.

In view of this, the disclosure provides a voice wake-up method for an electronic device. According to the voice wake-up method for the electronic device according to the disclosure, a first electronic device obtains a first distance between the first electronic device and a user based on ultrasonic detection, sends the first distance to a server, and receives a wake-up strategy fed back by the server indicating whether the first electronic device is an electronic device closest to the user among a plurality of connected electronic devices in a local area network. In this way, after the first electronic device detects a wake-up word, the first electronic device does not need to send the detected wake-up word to the server, the server does not need to receive a wake-up request generated by the electronic device based on the wake-up word in real time and to make a wake-up result for the received wake-up request, but after the first electronic device detects the wake-up word, the first electronic device directly determines whether to respond to the wake-up word according to the wake-up strategy, such that a wake-up response speed of the first electronic device is improved.

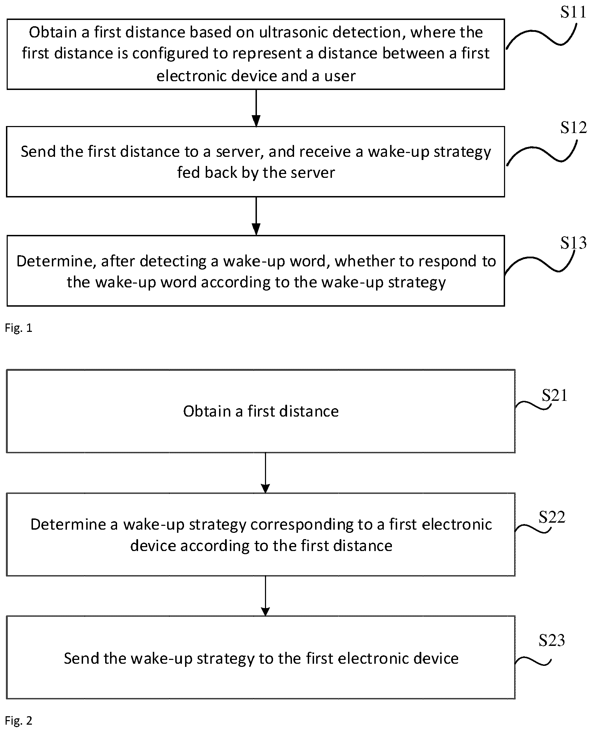

Fig. 1 is a flowchart of a voice wake-up method for an electronic device according to an example. As shown in Fig. 1, the voice wake-up method for the electronic device is performed by a first electronic device and includes steps S11, S12 and S13.

Step S11 includes obtaining a first distance based on ultrasonic detection. The first distance is configured to represent a distance between the first electronic device and a user.

The first electronic device and a plurality of second electronic devices are located in a same local area network. The first electronic device includes a voice wake-up module and an ultrasonic ranging module.

The first electronic device measures the first distance between the first electronic device and the user by means of the ultrasonic ranging module, and sends the first distance to a server.

The server feeds back a wake-up strategy to the first electronic device after determining, according to the first distance, whether the first electronic device is an electronic device closest to the user among a plurality of connected electronic devices in the local area network.

After detecting a wake-up word, the first electronic device determines whether to respond to the wake-up word according to the wake-up strategy fed back by the server.

In an example, the first distance may be obtained based on the ultrasonic detection as follows:
the first electronic device transmits a first acoustic wave signal to a space where the first electronic device is located according to preset ultrasonic frequency band information, and the first electronic device receives a second acoustic wave signal after the first acoustic wave signal is reflected. The second acoustic wave signal is a reflection signal of the first acoustic wave signal by a person or an object in the space where the first electronic device is located. The first electronic device determines, according to the second acoustic wave signal, whether a user exists in the space where the electronic device is located, and determines the first distance in a case that the user exists. A first target distance is determined and sent to the server in a case that it is determined that the user exists at a spatial position where a target electronic device is located.

Under a condition that the spatial position is determined, an ultrasonic wave signal is stable and hardly disturbed. After the first electronic device transmits the first acoustic wave signal and collects, through a microphone array included in the first electronic device, the second acoustic wave signal after the first acoustic wave signal is reflected, it is determined, according to the second acoustic wave signal, whether there is an acoustic wave disturbance area in the space where the first electronic device is located. In a case that there is an acoustic wave disturbance area, it can be determined that a user exists in the spatial position where the target electronic device is located.

In an example, whether the user exists in the space where the electronic device is located may be determined according to the second acoustic wave signal as follows:
the first electronic device inputs the second acoustic wave signal into a two-dimensional multiple signal classification (2D MUSIC) algorithm, an ultrasonic disturbance amplitude in the space where the first electronic device is located is calculated through the 2D MUSIC algorithm, and it is determined that the user exists in the space where the first electronic device is located in a case that an ultrasonic disturbance amplitude value is non-zero.

After it is determined that the user exists in the space where the first electronic device is located, an echo two-dimensional image may be constructed according to the ultrasonic disturbance amplitude value. In the echo two-dimensional image, an abscissa represents a distance from the first electronic device, and an ordinate represents an angle from the first electronic device.

Peak detection may be performed on the ultrasonic disturbance amplitude value according to the echo two-dimensional image, so as to obtain a disturbance center point representing an acoustic-wave-signal peak value, and a coordinate position of the disturbance center point is determined in the echo two-dimensional image. The disturbance center point is configured to represent a position of the user in a preset space, and the distance between the disturbance center point and the first electronic device is taken as the first distance.

The 2D MUSIC algorithm and a peaking algorithm may be, for example, pre-written into a chip of the first electronic device to determine the ultrasonic disturbance amplitude value around the first electronic device according to the 2D MUSIC algorithm.

Step S12 includes sending the first distance to a server, and receiving a wake-up strategy fed back by the server.

After the first electronic device obtains the first distance from the user based on the ultrasonic detection and sends the first distance to the server, the first electronic device may detect in real time whether the first distance changes, and send a latest first distance to the server in a case of detecting that the first distance changes.

The server may re-determine, according to the latest first distance, whether the latest first distance is the shortest distance received, and re-determine the wake-up strategy for the first electronic device.

Step S13 includes determining, after detecting a wake-up word, whether to respond to the wake-up word according to the wake-up strategy.

Thus, after detecting the wake-up word, the first electronic device determines, according to the wake-up strategy fed back by the server, whether to respond to the wake-up word.

For example, in a case that the wake-up strategy is to indicate that the first electronic device is an electronic device closest to the user among a plurality of connected electronic devices in the local area network, the first electronic device determines, according to the wake-up strategy, to respond to the wake-up word.

For example, in a case that the wake-up strategy is to indicate that the first electronic device is not an electronic device closest to the user among a plurality of connected electronic devices in the local area network, the first electronic device determines, according to the wake-up strategy, to not to respond to the wake-up word.

In the examples of the disclosure, the first electronic device obtains the first distance between the first electronic device and the user based on the ultrasonic detection, sends the first distance to the server, and receives a wake-up strategy fed back by the server indicating whether the first electronic device is an electronic device closest to the user among the plurality of connected electronic devices in the local area network. In this way, after the first electronic device detects the wake-up word, the first electronic device does not need to send the detected wake-up word to the server, the server does not need to receive a wake-up request generated by the first electronic device based on the wake-up word in real time and make a wake-up result for the received wake-up request, but after the first electronic device detects the wake-up word, the first electronic device directly determines whether to respond to the wake-up word according to the wake-up strategy, such that a wake-up response speed of the first electronic device is improved.

Fig. 2 is a flowchart of a voice wake-up method for an electronic device according to an example. As shown in Fig. 2, the voice wake-up method for the electronic device is performed by a server and includes steps S21, S22 and S23.

Step S21 includes obtaining a first distance.

The first distance is sent from a first electronic device. The first distance is configured to indicate a distance between the first electronic device and a user. The first electronic device and a plurality of second electronic devices are located in a same local area network.

Step S22 includes determining a wake-up strategy corresponding to a first electronic device according to the first distance.

The wake-up strategy is configured to indicate whether the first electronic device is an electronic device closest to the user among a plurality of connected electronic devices in the local area network.

In an example, the wake-up strategy corresponding to the first electronic device may be determined according to the first distance as follows:
obtaining a second distance, where the second distance is sent from the second electronic device, and the second distance indicates a distance between the second electronic device and the user; and comparing the first distance with the second distance, and obtaining the wake-up strategy for the first electronic device according to a comparison result.

For example, in a case that the first distance is less than the second distance, the wake-up strategy corresponding to the first electronic device is to indicate whether the first electronic device is an electronic device closest to the user among a plurality of connected electronic devices in the local area network. Alternatively, in a case that the second distance is not obtained, the wake-up strategy corresponding to the first electronic device is to indicate whether the first electronic device is an electronic device closest to the user among a plurality of connected electronic devices in the local area network. The wake-up strategy is for the first electronic device.

Step S23 includes sending the wake-up strategy to the first electronic device.

In a case that the server receives a updated first distance sent from the first electronic device, the server may re-determine the wake-up strategy corresponding to the first electronic device based on the above manner of determining the wake-up strategy corresponding to the first electronic device.

In the examples of the disclosure, after the first electronic device obtains the first distance between the first electronic device and the user based on the ultrasonic detection and sends the first distance to the server, the server determines the wake-up strategy corresponding to the first electronic device according to the first distance and sends the wake-up strategy to the first electronic device. After the first electronic device detects the wake-up word, the first electronic device may determine whether to respond to the wake-up word directly according to the wake-up strategy received from the server, such that a wake-up response speed of the first electronic device is improved.

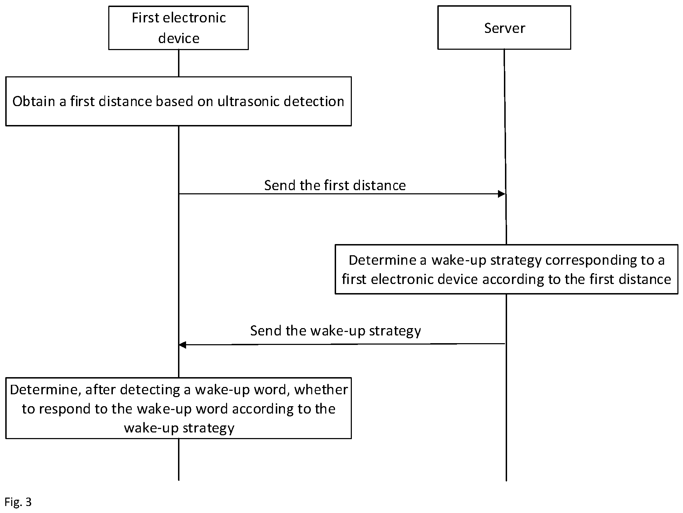

Fig. 3 is a flowchart of interaction of a voice wake-up method for an electronic device according to an example. As shown in Fig. 3, the voice wake-up method for the electronic device includes step S31 to S35.

Step S31 includes obtaining a first distance between a first electronic device and a user based on ultrasonic detection by the first electronic device.

Step S32 includes sending the first distance to a server by the first electronic device.

Step S33 includes obtaining the first distance by the server, and determining by the server a wake-up strategy corresponding to the first electronic device according to the first distance.

Step S34 includes sending the wake-up strategy to the first electronic device by the server.

Step S35 includes determining, after detecting a wake-up word by the first electronic device, whether to respond to the wake-up word according to the wake-up strategy by the first electronic device.

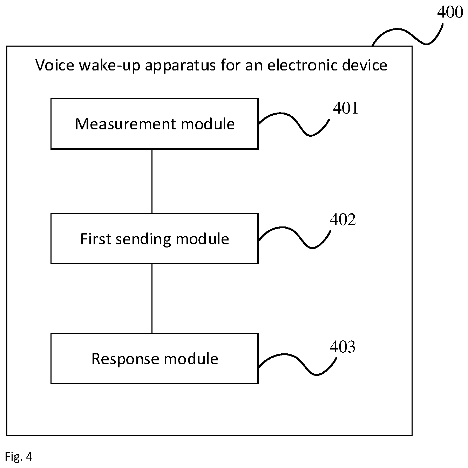

Fig. 4 is a block diagram of a voice wake-up apparatus 400 for an electronic device according to an example. The voice wake-up apparatus for the electronic device is applied to a first electronic device. The first electronic device and a plurality of second electronic devices are located in a same local area network. The voice wake-up apparatus includes a measurement module 401, a first sending module 402 and a response module 403.

The measurement module 401 is configured to obtain a first distance based on ultrasonic detection. The first distance is configured to represent a distance between the first electronic device and a user.

The first sending module 402 is configured to send the first distance to a server, and receive a wake-up strategy fed back by the server. The wake-up strategy is configured to indicate whether the first electronic device is an electronic device closest to the user among a plurality of connected electronic devices in the local area network.

The response module 403 is configured to determine, after a wake-up word is detected, whether to respond to the wake-up word according to the wake-up strategy.

In an example, the response module 403 determines whether to respond to the wake-up word according to the wake-up strategy as follows:
responding to the wake-up word in a case that the wake-up strategy indicates that the first electronic device is the electronic device closest to the user among the plurality of electronic devices.

In an example, the measurement module 401 obtains the first distance based on the ultrasonic detection as follows:
transmitting a first acoustic wave signal into a space where the first electronic device is located according to preset ultrasonic frequency band information;
receiving a second acoustic wave signal, where the second acoustic wave signal is a reflection signal of the first acoustic wave signal by a person or an object in the space where the first electronic device is located; and
determining whether a user exists in the space where the electronic device is located according to the second acoustic wave signal, and determining the first distance in a case that the user exists.

In an example, the measurement module 401 determines whether a user exists in the space where the electronic device is located according to the second acoustic wave signal as follows:
inputting the second acoustic wave signal into a two-dimensional multiple signal classification (2D MUSIC) algorithm to determine an ultrasonic disturbance amplitude value around the first electronic device; and
determining that the user exists in the space where the first electronic device is located in a case that the ultrasonic disturbance amplitude value is non-zero.

In an example, the measurement module 401 determines the first distance as follows:
constructing an echo two-dimensional image according to the ultrasonic disturbance amplitude value, where in the echo two-dimensional image, an abscissa represents a distance, and an ordinate represents an angle;
performing peak detection on the ultrasonic disturbance amplitude value according to the echo two-dimensional image so as to obtain a disturbance center point representing an acoustic-wave-signal peak value, and determining a coordinate position of the disturbance center point in the echo two-dimensional image, where the disturbance center point is configured to represent a position of the user in a preset space; and
setting a distance between the disturbance center point and the first electronic device as the first distance.

In an example, after the first distance is determined, the voice wake-up apparatus further includes:
an updating module, configured to detect in real time whether the first distance changes; and
send a latest first distance to the server in a case that the first distance changes.

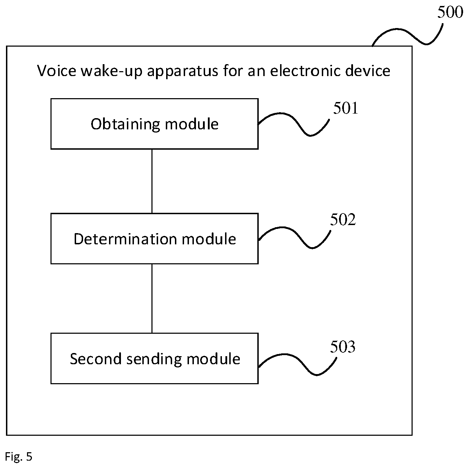

Fig. 5 is a block diagram of a voice wake-up apparatus 500 for an electronic device according to an example. The voice wake-up apparatus for the electronic device is applied to a server and includes an obtaining module 501, a determination module 502 and a second sending module 503.

The obtaining module 501 is configured to obtain a first distance. The first distance is sent from a first electronic device. The first distance is configured to indicate a distance between the first electronic device and a user. The first electronic device and a plurality of second electronic devices are located in a same local area network.

The determination module 502 is configured to determine a wake-up strategy corresponding to the first electronic device according to the first distance. The wake-up strategy is configured to indicate whether the first electronic device is an electronic device closest to the user among a plurality of connected electronic devices in the local area network.

The second sending module 503 is configured to send the wake-up strategy to the first electronic device.

In an example, the determination module 502 determines the wake-up strategy corresponding to the first electronic device according to the first distance as follows:
obtaining a second distance, where the second distance is sent from the second electronic device, and the second distance indicates a distance between the second electronic device and the user; and
comparing the first distance with the second distance, and obtaining the wake-up strategy according to a comparison result.

With respect to the apparatus in the above examples, ways in which the various modules execute operations have been described in detail in the examples relating to the method, and will not be described in detail.

The disclosure further provides a computer-readable storage medium, storing computer program instructions, where when executed by a processor, the computer program instructions implement the steps of the voice wake-up method for the electronic device provided in the disclosure.

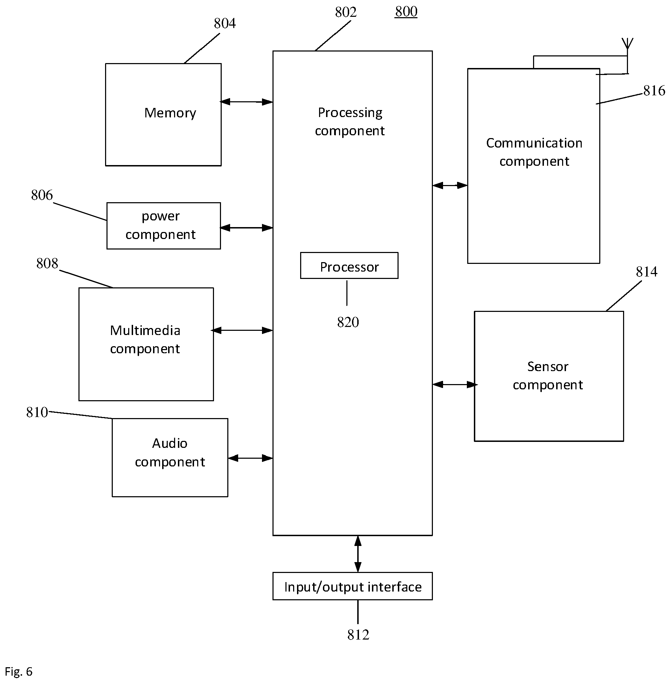

Fig. 6 is a block diagram of a voice wake-up apparatus 800 for an electronic device according to an example. For example, the voice wake-up apparatus 800 may be a mobile phone, a computer, a digital broadcast terminal, a messaging apparatus, a gaming console, a tablet apparatus, a medical apparatus, a fitness apparatus, a personal digital assistant, etc.

With reference to Fig. 6, the voice wake-up apparatus 800 may include one or more of a processing component 802, a memory 804, a power component 806, a multimedia component 808, an audio component 810, an input/output (I/O) interface 812, a sensor component 814, and a communication component 816.

The processing component 802 generally controls overall operation of the apparatus 800, for example, operation associated with display, phone calls, data communications, camera operations, and recording operations. The processing component 802 may include one or more processors 820 to execute instructions to complete all or some of the steps of the voice wake-up method for the electronic device. Moreover, the processing component 802 may include one or more modules to facilitate interaction between the processing component 802 and other components. For example, the processing component 802 may include the multimedia module to facilitate interaction between the multimedia component 808 and the processing component 802.

The memory 804 is configured to store various types of data to support an operation on the apparatus 800. Instances of such data include instructions, operated on the apparatus 800, for any application or method, contact data, phonebook data, messages, pictures, video, etc. The memory 804 may be implemented by any types of volatile or non-volatile memory devices, or their combinations, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 supplies power to the various components of the apparatus 800. The power component 806 may include a power management system, one or more power sources, and other components associated with power generating, managing, and distributing for the apparatus 800.

The multimedia component 808 includes a screen that provides an output interface between the apparatus 800 and the user. In some examples, the screen may include a liquid crystal display (LCD) and a touch panel (TP). If the screen includes a touch panel, the screen may be implemented as a touch screen, so as to receive an input signal from a user. The touch panel includes one or more touch sensors to sense touches, slides, and gestures on the touch panel. The touch sensor may not only sense a boundary of a touch or slide action, but also detect duration and pressure related to the touch or slide operation. In some examples, the multimedia component 808 includes at least one of a front-facing camera or a rear-facing camera. When the apparatus 800 is in an operational mode, for example, a photographing mode or a video mode, at least one of the front-facing camera or the rear-facing camera may receive external multimedia data. Each of the front-facing camera and the rear-facing camera may be a fixed optical lens system or have a focal length and optical zoom capability.

The audio component 810 is configured to output and/or input audio signals. For example, the audio component 810 includes a microphone (MIC) configured to receive an external audio signal when the apparatus 800 is in the operational mode, for example, a calling mode, a recording mode, and a speech identification mode. The received audio signal may be further stored in the memory 804 or transmitted via the communication component 816. In some examples, the audio component 810 further includes a speaker for outputting an audio signal.

The I/O interface 812 provides an interface between the processing component 802 and a peripheral interface module, which may be a keyboard, a click wheel, a button, etc. These buttons may include, but are not limited to, a home button, a volume button, a start button, and a lock button.

The sensor component 814 includes one or more sensors for providing state assessments of various aspects for the apparatus 800. For example, the sensor component 814 may detect an on/off state of the apparatus 800 and relative positioning of the components. For example, the components are a display and a keypad of the apparatus 800. The sensor component 814 may also detect a change in position of the apparatus 800 or a component of the apparatus 800, the presence or absence of contact between the user and the apparatus 800, orientation or acceleration/deceleration of the apparatus 800, and temperature variation of the apparatus 800. The sensor component 814 may include a proximity sensor configured to detect the presence of a nearby object in the absence of any physical contact. The sensor component 814 may also include a light sensor, for example, a complementary metal oxide semiconductor (CMOS) or charge coupled device (CCD) image sensor, for use in imaging applications. In some examples, the sensor component 814 may further include an acceleration sensor, a gyroscope sensor, a magnetic sensor, a pressure sensor or a temperature sensor.

The communication component 816 is configured to facilitate communication between the apparatus 800 and other device in a wired or wireless mode. The apparatus 800 may access a wireless network based on a communication standard, for instance, WiFi, 2G, or 3G, or their combination. In an example, the communication component 816 receives a broadcast signal or broadcast related information from an external broadcast management system by means of a broadcast channel. In an example, the communication component 816 also includes a near field communication (NFC) module to facilitate short-range communication. For example, the NFC module may be implemented based on a radio frequency identification (RFID) technology, an infrared data association (IrDA) technology, an ultra wide band (UWB) technology, a Bluetooth (BT) technology, or other technologies.

In an example, the apparatus 800 may be implemented by one or more of application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements for executing the voice wake-up method for the electronic device.

In an example, a non-transitory computer-readable storage medium is further provided, and includes instructions, for example, a memory 804 including instructions. The instructions may be executed by the processor 820 of the apparatus 800 so as to execute the voice wake-up method for the electronic device. For example, the non-transitory computer-readable storage medium may be a read-only memory (ROM), a random access memory (RAM), a compact disc read-only memory (CD-ROM), a magnetic tape, a floppy disk, an optical data storage apparatus, etc.

The above apparatus may be a part of a separate electronic device in addition to a separate electronic device. For instance, the apparatus may be an integrated circuit (IC) or a chip. The integrated circuit may be an IC or a collection of a plurality of ICs. The chip may include, but is not limited to, the following categories: a graphics processing unit (GPU), a central processing unit (CPU), a field programmable gate array (FPGA), a digital signal processor (DSP), an application specific integrated circuit (ASIC), a system on chip (SOC), etc. The above integrated circuit or chip may be used to execute executable instructions (or code) to implement the voice wake-up method for the electronic device. The executable instructions may be stored on the integrated circuit or chip or retrieved from another apparatus or device. For example, the integrated circuit or chip includes a processor, a memory, and an interface for communicating with another apparatus. The executable instructions may be stored in the processor, and the executable instructions implement the voice wake-up method for the electronic device when executed by a processor. Alternatively, the integrated circuit or chip may receive the executable instructions by means of the interface and transmit the executable instructions to the processor for execution to implement the voice wake-up method for the electronic device.

In another example, a computer program product is further provided. The computer program product includes a computer program executable by a programmable apparatus. The computer program has a code portion for executing the voice wake-up method for the electronic device when executed by the programmable apparatus.

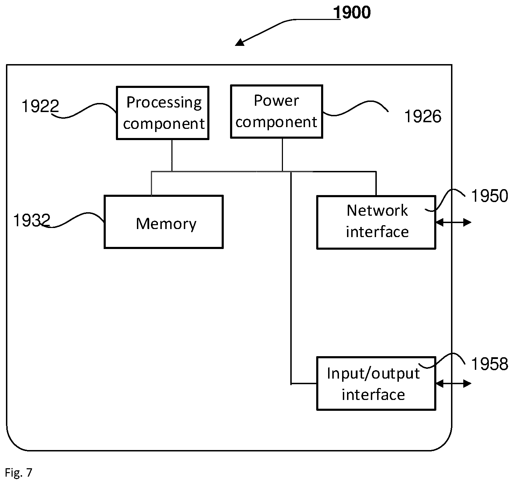

Fig. 7 is a block diagram of a voice wake-up apparatus 1900 for an electronic device according to an example. For example, the apparatus 1900 may be provided as a server. With reference to Fig. 7, the apparatus 1900 includes a processing component 1922 which further includes one or more processors, and memory resources represented by a memory 1932 for storing instructions, for instance, an application program, executable by the processing component 1922. The application program stored in the memory 1932 may include one or more modules, each of which corresponds to a set of instructions. Further, the processing component 1922 is configured to execute the instructions to implement the voice wake-up method for the electronic device.

The apparatus 1900 may further include a power component 1926 configured to implement power supply management of the apparatus 1900, a wired or wireless network interface 1950 configured to connect the apparatus 1900 to a network, and an input/output (I/O) interface 1958. The apparatus 1900 may operate an operating system stored in the memory 1932, such as Windows Server^{™}, Mac OS X^{™}, Unix^{™}, Linux^{™}, FreeBSD^{™}, etc.

Other examples of the disclosure will readily occur to those skilled in the art upon consideration of the specification and practical disclosure. The disclosure is intended to cover any variations, uses, or adaptations of the disclosure, and these variations, uses, or adaptations follow general principles of the disclosure and include common general knowledge or customary technical means in the field not disclosed in the disclosure. The description and examples are considered as illustrative, and a true scope and spirit of the disclosure are indicated by the following claims.

It is to be understood that the disclosure is not limited to the precise structure that has been described above and shown in the accompanying drawings, and that various modifications and changes may be made without departing from its scope. The scope of the disclosure is limited by the appended claims.

## Claims

1. A voice wake-up method for an electronic device, performed by a first electronic device, wherein the first electronic device and a plurality of second electronic devices are located in a same local area network, and the method comprises:
obtaining a first distance based on ultrasonic detection, wherein the first distance is configured to represent a distance between the first electronic device and a user;
sending the first distance to a server, and receiving a wake-up strategy fed back by the server, wherein the wake-up strategy is configured to indicate whether the first electronic device is an electronic device closest to the user among a plurality of connected electronic devices in the local area network; and
determining, after detecting a wake-up word, whether to respond to the wake-up word according to the wake-up strategy.

2. The method according to claim 1, wherein determining whether to respond to the wake-up word according to the wake-up strategy comprises:
responding to the wake-up word in a case that the wake-up strategy indicates that the first electronic device is the electronic device closest to the user among the plurality of electronic devices.

3. The method according to claim 1, wherein obtaining the first distance based on the ultrasonic detection comprises:
transmitting a first acoustic wave signal into a space where the first electronic device is located according to preset ultrasonic frequency band information;
receiving a second acoustic wave signal, wherein the second acoustic wave signal is a reflection signal of the first acoustic wave signal by a person or an object in the space where the first electronic device is located; and
determining whether a user exists in the space where the electronic device is located according to the second acoustic wave signal, and determining the first distance in a case that the user exists.

4. The method according to claim 3, wherein determining whether a user exists in the space where the electronic device is located according to the second acoustic wave signal comprises:
determining an ultrasonic disturbance amplitude value around the first electronic device by inputting the second acoustic wave signal into a two-dimensional multiple signal classification (2D MUSIC) algorithm; and
determining that the user exists in the space where the first electronic device is located in a case that the ultrasonic disturbance amplitude value is non-zero.

5. The method according to claim 4, wherein determining the first distance comprises:
constructing an echo two-dimensional image according to the ultrasonic disturbance amplitude value, wherein in the two-dimensional image, an abscissa represents a distance, and an ordinate represents an angle;
obtaining a disturbance center point representing an acoustic-wave-signal peak value by performing peak detection on the ultrasonic disturbance amplitude value according to the two-dimensional image, and determining a coordinate position of the disturbance center point in the echo two-dimensional image, wherein the disturbance center point is configured to represent a position of the user in a preset space; and
setting a distance between the disturbance center point and the first electronic device as the first distance.

6. The method according to claim 1, wherein after determining the first distance, the method further comprises:
detecting in real time whether the first distance changes; and
sending a latest first distance to the server in a case that the first distance changes.

7. A voice wake-up method for an electronic device, performed by a server, and comprising:
obtaining a first distance, wherein the first distance is sent from a first electronic device, the first distance is configured to indicate a distance between the first electronic device and a user, and
the first electronic device and a plurality of second electronic devices are located in a same local area network;
determining a wake-up strategy corresponding to the first electronic device according to the first distance, wherein the wake-up strategy is configured to indicate whether the first electronic device is an electronic device closest to the user among a plurality of connected electronic devices in the local area network; and
sending the wake-up strategy to the first electronic device.

8. The method according to claim 7, wherein determining the wake-up strategy corresponding to the first electronic device according to the first distance comprises:
obtaining a second distance, wherein the second distance is sent from the second electronic device, and the second distance indicates a distance between the second electronic device and the user; and
comparing the first distance with the second distance, and obtaining the wake-up strategy according to a comparison result.

9. A voice wake-up apparatus for an electronic device, applied to a first electronic device, wherein the first electronic device and a plurality of second electronic devices are located in a same local area network, and the apparatus comprises:
a measurement module configured to obtain a first distance based on ultrasonic detection, wherein the first distance is configured to represent a distance between the first electronic device and a user;
a first sending module configured to send the first distance to a server, and receive a wake-up strategy fed back by the server, wherein the wake-up strategy is configured to indicate whether the first electronic device is an electronic device closest to the user among a plurality of connected electronic devices in the local area network; and
a response module configured to determine, after a wake-up word is detected, whether to respond to the wake-up word according to the wake-up strategy.

10. A voice wake-up apparatus for an electronic device, applied to a server, and comprising:
an obtaining module configured to obtain a first distance, wherein the first distance is sent from a first electronic device, the first distance is configured to indicate a distance between the first electronic device and a user, and the first electronic device and a plurality of second electronic devices are located in a same local area network;
a determination module configured to determine a wake-up strategy corresponding to the first electronic device according to the first distance, wherein the wake-up strategy is configured to indicate whether the first electronic device is an electronic device closest to the user among a plurality of connected electronic devices in the local area network; and
a second sending module configured to send the wake-up strategy to the first electronic device.

11. A voice wake-up apparatus for an electronic device, comprising:
a processor; and
a memory configured to store processor-executable instructions;
wherein the processor is configured to implement the steps of the method according to any one of claims 1-6 or the steps of the method according to any one of claims 7-8.

12. A computer-readable storage medium, storing computer program instructions, wherein the program instructions implement the steps of the method according to any one of claims 1-6 or the steps of the method according to any one of claims 7-8 when executed by a processor.

13. A chip, comprising a processor and an interface, wherein the processor is configured to read instructions so as to execute the method according to any one of claims 1-6.
